# EUROPEAN PATENT APPLICATION

(11) **EP 4 353 925 A1**
(43) Date of publication of application: **17.04.2024**
(21) Application number: 22804961.5
(22) Date of filing: 17.05.2022
(51) Int. Cl.: E04H 15/06, E04H 15/30

(54) **ROOFTOP TENT FOR VEHICLE**

(30) Priority: 18.05.2021 KR 20210064142
(71) Applicant: iKamper Co., Ltd., Paju-si, Gyeonggi-do 10858 (KR)
(72) Inventor: PARK, Soon Gyu, Paju-si Gyeonggi-do 10876 (KR)
(74) Representative: Osterhoff, Utz
(86) International application number: PCT/KR2022/007057
(87) International publication number: WO 2022/245107

(57) **Abstract**

A rooftop tent according to one embodiment of the present invention comprises: a first cover part including a first plate-shaped member provided in a plate shape; a second cover part including a second plate-shaped member provided in a plate shape; a hinge connection part rotatably connecting the first cover part and the second cover part; a tent part coupled to the first cover part and the second cover part; and a waterproof part having one end fastened to the first cover part. One of the first cover part or the second cover part can be fixedly installed on the roof of a vehicle. The rooftop tent may have a folding mode in which the first cover part and the second cover part are arranged side by side, and the tent part is accommodated in the space between the first cover part and the second cover part, and an unfolding mode in which the tent part unfolds as one of the first cover part or the second cover part rotates about the hinge connection part with respect to the other.

## Description

### TECHNICAL FIELD

The present disclosure relates to a vehicular rooftop tent.

### BACKGROUND ART

In general, tents refer to assembled and mobile houses that can be dismantled and transported. Today, these tents are mainly used for military, exploration, hiking, and camping for temporary camping rather than for everyday residential purposes.

The shape, size, and material of tents also change depending on the purpose, place, number of people, and season of use, and they vary widely in their use and size, ranging from those used for military and school camping to large-scale tents used for outdoor music, theater, and circus.

In particular, tents used for leisure activities such as mountain climbing, camping and traveling have a size for 5 to 10 people to be carried by one person. In tents for leisure, there are tents in various shapes such as a triangular shape, a roofed shape, a house shape, a one-sided inclined shape, a half-moon shape, and a dome shape.

However, such a conventional tent is inconvenient to move due to its large volume, and difficult to assemble and disassemble. Also, it is complicated in structure, resulting in frequent breakdowns of joints. Particularly, when using a tent for leisure, a user travels to a campsite mainly by using a vehicle, then installs a tent prepared for use. The tent stored in the vehicle is so bulky that it is difficult to store a large number of supplies together with the tent and it is inconvenient to take out the vehicle and install it on the campsite.

Further, since a flat ground surface must be secured to unfold and install the tent, there has been a restriction in the location selection for installing the tent.

In order to solve the problems of the conventional tent, a vehicular rooftop tent has been proposed as patent document 1. This rooftop tent is often referred to as a car pension, in which the tent is installed on a vehicle roof to be used as a mobile home. Unlike a large trailer or a camper, the vehicular rooftop tent, a combination of leisure and automobile culture, has the advantage that it can be easily installed in a vehicle and operated.

The conventional vehicular rooftop tent is configured to be covered with a waterproof cover made of tarpaulin to prevent the tent from getting wet in the rain. In this case, when the vehicle is traveling, the wind is infiltrated into the waterproof cover made of the material which is usually used for fabric, which may interfere with a driver's field of vision. Further, the waterproof cover may act as a resistance during driving to lower the driving efficiency, and has not a good appearance.

Prior Technology Documents: Korean Patent No. 10-1436951

### SUMMARY OF INVENTION

### TECHNICAL PROBLEM

Embodiments of the present disclosure were devised to solve the above-described conventional problems, and are intended to provide a rooftop tent that does not obstruct the driver's field of vision while driving, can minimize resistance while driving, and has a neat appearance.

Additionally, we would like to provide a rooftop tent with improved waterproofing capabilities.

In addition, we would like to provide a rooftop tent in which the waterproof fabric can be easily attached and detached from the cover part.

### SOLUTION TO PROBLEM

A rooftop tent according to one embodiment of the present disclosure includes a first cover part including a first plate-shaped member; a second cover part including a second plate-shaped member and rotatably connected to the first cover part; a tent portion coupled to the first cover part and the second cover part; and a waterproof part in which one end is fastened to the first cover part, wherein the rooftop tent has a folded mode in which the first cover part and the second cover part are arranged side by side and the tent part is accommodated in a space between the first cover part and the second cover part, and an unfolded mode in which the tent part is unfolded by rotating one of the first cover part and the second cover part about the hinge connection part with respect to the other, and the waterproof part comprising: a fastening rod detachably fastened to an edge of the first cover part in the folding mode state; a waterproof fabric in which one end is connected to the fastening rod and closes a space between the first cover part and the second cover part; and a tightening module provided at the other end of the waterproof fabric and selectively tightening or releasing the other end of the waterproof fabric, wherein the tightening module includes a belt receiving part provided along the edge of the other end of the waterproof fabric, including a space inside, and open at both ends; and a belt accommodated inside the belt receiving part and having both ends exposed to the outside of the belt receiving part to be selectively connected or separated.

A rooftop tent according to one embodiment of the present disclosure further comprises a hook part provided at one end of the belt, and a ring part provided at the other end of the belt and into which the hook part is inserted, and wherein at least one of the hook part and the ring part is provided to be adjustable in the belt.

In the rooftop tent according to one embodiment of the present disclosure, the waterproof fabric is provided to cover at least a portion of the bottom surface of the second cover portion in the folding mode state.

In the rooftop tent according to one embodiment of the present disclosure, the first cover part includes a first edge frame having a shape capable of inserting the fastening rod and having a waterproof member fastening passage in which a gap is formed along a longitudinal direction, and the fastening rod is inserted into the waterproof member fastening passage to fasten the waterproof part to the first edge frame.

The rooftop tent according to one embodiment of the present disclosure further comprises a first corner frame covering at least one of corner portions of the first plate-shaped member, and a second corner frame covering at least one of corner portions of the second plate-shaped member, and wherein the first corner frame includes: an outer fastening member fastened to a corner portion of the first plate-shaped member; and an inner fastening member fastened to the outer fastening member and the first plate-shaped member such that at least a portion of the outer fastening member is stacked, and wherein the second corner frame includes: a tent outer fastening member fastened to a corner portion of the second plate-shaped member to be in contact with one surface of the second plate-shaped member; and a tent inner fastening member fastened to the tent outer fastening member so that at least a portion of the tent outer fastening member is stacked.

### ADVANTAGEOUS EFFECTS OF INVENTION

According to embodiments of the present disclosure, there is an effect of minimizing resistance while driving without obstructing the driver's field of vision while driving.

In addition, the neat appearance of the rooftop tent has the effect of arousing the interest of consumers.

In addition, it has the effect of minimizing the problem of rainwater flowing into the rooftop.

In addition, there is an effect that the waterproof fabric can be easily attached and detached from the cover part.

### BRIEF DESCRIPTION OF DRAWINGS

Figure 1 is a perspective view showing a rooftop tent installed according to an embodiment of the present disclosure.
Figure 2 is a perspective view showing the folded mode of the rooftop tent of Figure 1.
Figure 3 is an exploded perspective view showing an enlarged first cover part of a rooftop tent according to an embodiment of the present disclosure.
Figure 4 is an exploded perspective view showing an enlarged second cover part of a rooftop tent according to an embodiment of the present disclosure.
Figure 5 is an enlarged view of A of Figure 1.
Figure 6 is an exploded perspective view showing a state in which the waterproof part is separated from the rooftop tent of Figure 2.
Figure 7 is a partial cross-sectional view taken along line B-B' of Figure 2.
Figure 8 is a schematic plan view of the tightening module.

### DESCRIPTION OF EMBODIMENTS

Hereinafter, specific embodiments for implementing the technical idea of the present disclosure will be described in detail with reference to the drawings.

In addition, when describing the present disclosure, if it is determined that a detailed description of a related known configuration or function may obscure the gist of the present disclosure, the detailed description will be omitted.

Additionally, when a component is mentioned as being 'connected' or 'in contact' with another component, it should be understood that it may be directly connected to or in contact with the other component, but other components may also exist in between.

The terminology used herein is to describe particular embodiments only and is not intended to limit the present disclosure. Singular forms are intended to include plural forms unless the context clearly indicates otherwise.

Hereinafter, a vehicular rooftop tent according to an embodiment of the present disclosure will be described with reference to the drawings.

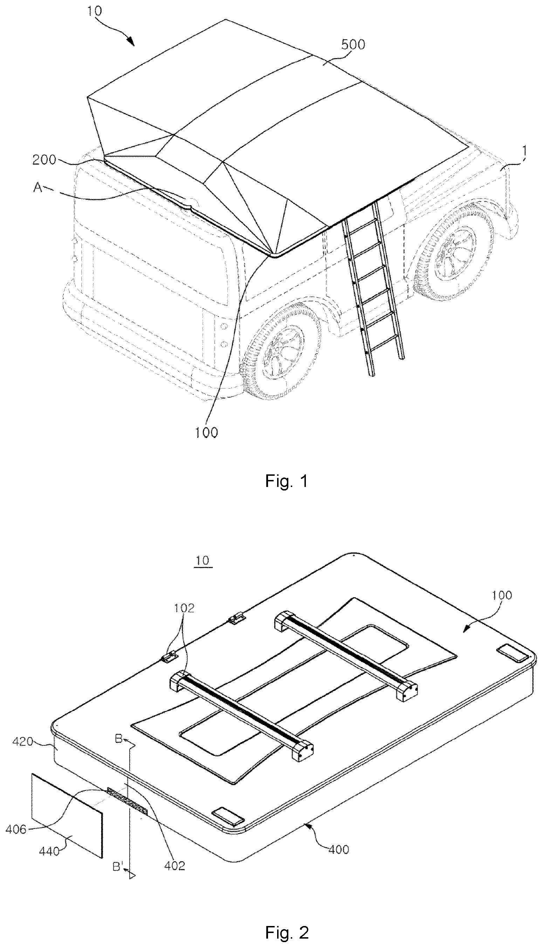

Referring to FIG. 1, a vehicular rooftop tent 10 according to an embodiment of the disclosure may be fixedly installed and transported on a roof of the vehicle 1, and in order to arrive at a campsite and be used for residential purposes, the installation of the tent may be completed by simply unfolding the tent while being mounted on the roof of the vehicle 1. The vehicular rooftop tent 10 may be installed to support a portion protruding outside the roof of the vehicle 1 by using a member such as a ladder after installation is completed.

The vehicular rooftop tent 10 includes a first cover part 100, a second cover part 200, a hinge connection part 300, a waterproof part 400, and a tent part 500. Specifically, the first cover part 100 includes a first plate-shaped member 110, the second cover part 200 includes a second plate-shaped member 210, and the hinge connection part 300 rotatably connects the first cover part 100 and the second cover part 200. In addition, one end of the waterproof part 400 is fastened to the first cover part 100, and the tent part 500 is coupled to the first cover part 100 and the second cover part 200.

According to this configuration, in a state in which the second cover part 200 is fixedly installed on the loop of the vehicle 1, the first cover part 100 is unfolded while being rotated about the hinge connection part 300, so that the tent part 500, accommodated by the first cover part 100 and the second cover part 200, is unfolded to have its original form shape as a tent as illustrated in FIG. 1. In other words, the vehicular rooftop tent 10 has a folded mode as shown in FIG. 2 in which the first cover part 100 and the second cover part 200 are arranged side by side, and the tent part 500 is accommodated in a space between the first cover part 100 and the second cover part 200, and an unfolded mode as shown in FIG. 1 in which the tent part 500 is unfolded as the first cover part 100 rotates about the hinge connection part 300 with respect to the second cover part 200.

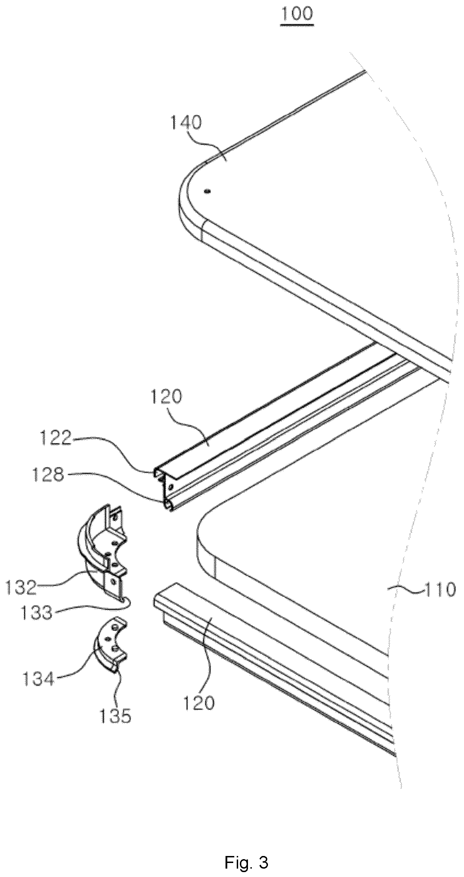

Referring to FIGS. 2 and 3, the first cover part 100 includes a first plate-shaped member 110, a first edge frame 120, a first corner frame 130, and an upper cover 140. The first cover part 100 covers one surface of the accommodation space for accommodating the tent part 500, and includes a first plate-shaped member 110. The first plate-shaped member 110 may be provided in a simple flat plate shape, and may have an outer surface facing the outside and an inner surface facing a space in which the tent portion 500 is accommodated. In addition, all four corners of the first plate-shaped member 110 may be formed in a round shape. An outer surface of the first plate-shaped member 110 may be provided with an exterior member 102 including a hinge for fastening a ladder, a beam for fixing other items, and the like.

The first edge frame 120 is a frame installed along four edges of the first plate-shaped member 110, and may be made of a light and hard material such as aluminum. A waterproof member fastening passage 122 having a shape into which the fastening rod 410 of the waterproof portion 400, which will be described later, can be inserted, is formed on one surface of the first edge frame 120. For example, the waterproof member fastening passage 122 may be formed on an upper outer surface of the edge corner frame 120.

The waterproof member fastening passage 122 may include a gap formed with respect to a surface facing the second cover part 200, and the gap may be formed such that the waterproof member fastening passage 122 is opened over the entire length of the first edge frame 120, and the waterproof part 400 may pass through the gap. In addition, the waterproof member fastening passage 122 may be formed in a shape continuously extending along the circumference of the first edge frame 120, and may be formed in a shape opened with respect to both ends of the first edge frame 120. Accordingly, the waterproof portion 400 may be fastened to the first edge frame 120 along the four edges of the first plate-shaped member 110.

A first tent fixing passage 128 may be formed on one surface of the first edge frame 120, and the tent portion 500 may be fastened and fixed through the first tent fixing passage 128. In this case, the first tent fixing passage 128 may be formed, for example, on a lower inner surface of the first edge frame 120.

The first corner frame 130 may be provided to cover at least one of corner portions of the first plate-shaped member 110, and for example, may be provided at all edge portions of the first plate-shaped member 110. The first corner frame 130 may have a round shape to correspond to the corner shape of the first plate-shaped member 110.

In addition, the first corner frame 130 may include an outer fastening member 132 fastened to a corner portion of the first plate-shaped member 110, and the inner fastening member 134 fastened to the outer fastening member 132 and the first plate-shaped member 110 so as to at least partially overlap the outer fastening member 132. In other words, the first corner frame 130 may be provided in a form in which two members are assembled.

The outer fastening member 132 may constitute the outermost surface of the first corner frame 130, and may be connected to the first edge frame 120 to have a shape in which the shape of the first edge frame 120 extends. In addition, it may include an outer lower edge 133 having a shape in which a partial shape of the first edge frame 120 forming the first tent fixing passage 128 extends.

The inner fastening member 134 may be partially stacked with the outer fastening member 132 to be fastened together with the first plate-shaped member 110 and the outer fastening member 132. The inner fastening member 134 may include an inner lower edge 135 having a shape in which the remaining shape of the first edge frame 120 forming the first tent fixing passage 128 extends.

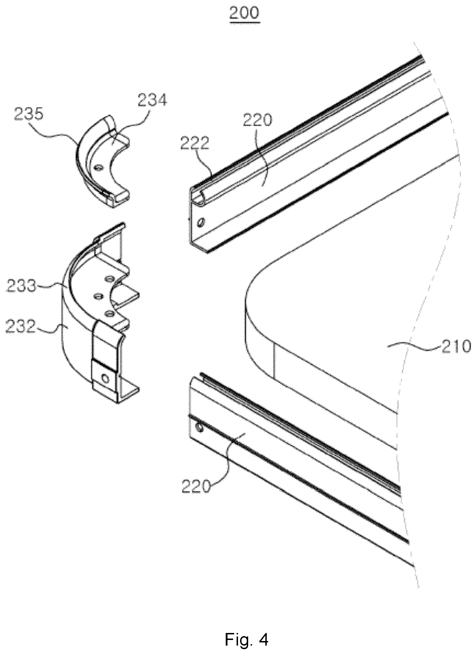

Referring to FIG. 4, the second cover part 200 constituting a space in which the tent part 500 is accommodated together with the first cover part 100 while being rotatably connected to the first cover part 100 includes a second plate-shaped member 210, a second edge frame 220, and a second corner frame 230. The second cover part 200 covers the other surface of the storage space for storing the tent part 500, and includes a second plate-shaped member 210. The second plate-shaped member 210 may be provided in a simple flat plate shape, and may have an outer surface facing the outside and an inner surface facing a space in which the tent part 500 is accommodated. In addition, all four corners of the second plate-shaped member 210 may be formed in a round shape, and a member (not shown) for being fixedly installed in the loop of the vehicle 1 may be provided on the outer surface of the second plate-shaped member 210.

The second edge frame 220 is a frame installed along four edges of the second plate-shaped member 210 and may be made of a light and hard material such as aluminum.

In addition, a second tent fixing passage 222 is additionally formed in the second edge frame 220, and the tent part 500 may be fastened and fixed through the second tent fixing passage 222. The second tent fixing passage 222 may be formed at a position facing the first tent fixing passage 128.

The second corner frame 230 is provided to cover at least one of corner portions of the second plate-shaped member 210, and may be provided to all edges portions of the second plate-shaped member 210, for example. The second corner frame 230 may have a round shape to correspond to the corner shape of the second plate-shaped member 210.

In addition, the second corner frame 230 may include a tent outer fastening member 232 which is fastened to a corner portion of the second plate-shaped member 210 so as to be in contact with one surface of the second plate-shaped member 210, and a tent inner fastening member 234 which is fastened to the tent outer fastening member 232 so that at least a portion of the tent inner fastening member is stacked with the tent outer fastening member 232 .

A tent outer fastening member 232 may constitute the outermost surface of the second corner frame 230, and may be connected to the second edge frame 220 to have a shape in which a part of the shape of the second edge frame 220 extends. In addition, it may include an outer upper edge 233 having a shape in which a partial shape of the second edge frame 220 forming the second tent fixing passage 222 extends.

The tent inner fastening member 234 may be partially stacked with the tent outer fastening member 232 to be fastened together with the second plate-shaped member 210 and the tent outer fastening member 232. The tent inner fastening member 234 may include an inner upper edge 235 having a shape in which the remaining shape of the second edge frame 220 forming the second tent fixing passage 222 extends.

The configurations of the first cover part 100 and the second cover part 200 as described above may be modified in some cases. For example, the first cover part 100 may be configured to include a second plate-shaped member 210, a second edge frame 220, and a second corner frame 230, and the second cover part 200 may be configured to include a first plate-shaped member 110, a first edge frame 120, and a first corner frame 130.

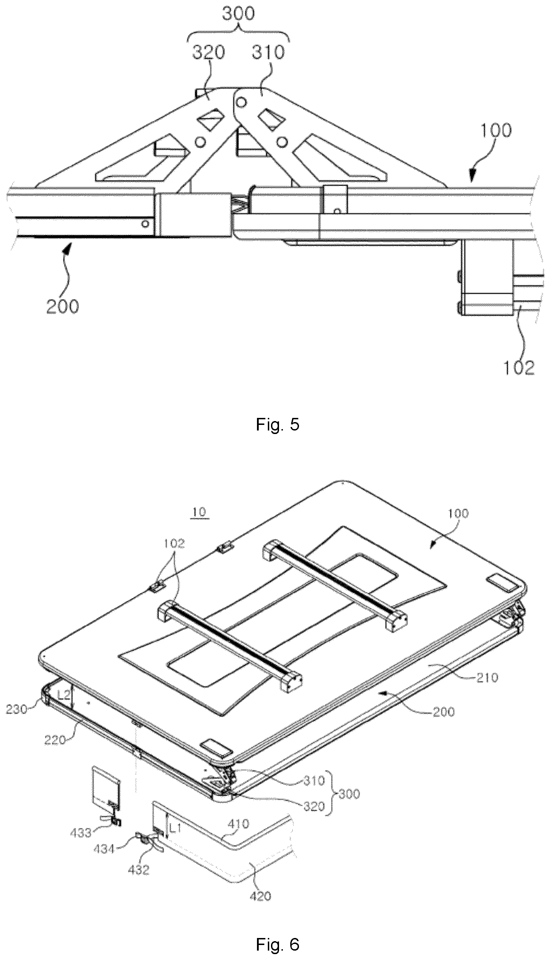

Referring to FIG. 5, the hinge connection part 300 includes a first hinge member 310 connected to the first cover part 100 and a second hinge member 320 connected to the second cover part 200. The first hinge member 310 and the second hinge member 320 may be fixed to each other by pins to be configured to be pivotable between each other. Accordingly, when the mode of the vehicular rooftop tent 10 is switched, the first cover part 100 may be rotated with respect to the connection point of the first hinge member 310 and the second hinge member 320 with respect to the second cover part 200.

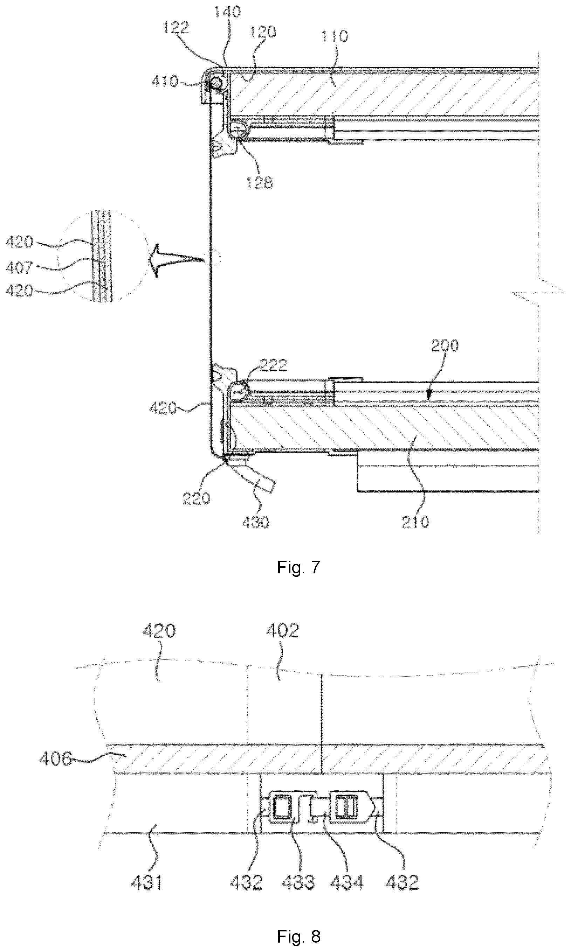

Referring to FIGS. 6 to 8, the waterproof part 400 is provided to close a space between the first cover part 100 and the second cover part 200 by detachably fastening one end to an edge of the first cover part 100 in a folded mode state. The waterproof part 400 in a folded mode state may include a fastening rod 410, one end of which is detachably fastened to the edge of the first cover part 100, a waterproof fabric 420 connected to the fastening rod 410 and closing a space between the first cover part 100 and the second cover part 200, and a tightening module 430 provided at the other end of the waterproof fabric 420 and selectively tightening or releasing the other end of the waterproof fabric 420.

The fastening rod 410 may be formed in the form of a flexible round rod, and the waterproof fabric 420 may be provided in a shape in which one end surrounds the fastening rod 410 and extends in one direction therefrom. Such a waterproof fabric may be made of, for example, a tarpaulin material.

The waterproof fabric 420 may be provided to seal a space between the first cover part 100 and the second cover part 200, and for this purpose, the length (L1) of the waterproof fabric 420 may be longer than the gap (L2) between the first cover part 100 and the second cover part 200.

The waterproof part 400 is accommodated by inserting the fastening rod 410 into the waterproof member fastening passage 122, and may be fastened to the first edge frame 120 over the entire edge of the first plate-shaped member 110. In addition, when the fastening rod 410 is completely accommodated in the waterproof member fastening passage 122, both ends of the waterproof part 400 may be in contact with each other as shown in FIG. 2 to form a joint 402. In this case, in the joint 402, both ends of the waterproof fabric 420 of the waterproof part 400 may be partially overlapped, and both ends of the waterproof part 400 may be connected by a detachable material 407 such as Velcro.

A joint cover attachment member 406 may be provided on the periphery of the joint 402. The joint cover attachment member 406, for example, may be provided in Velcro. Since the joint cover 440 is detachably attached to the joint cover attachment member 406, flooding through the joint 402 may be prevented. The joint cover 440 may be made of the same material as the waterproof fabric.

The tightening module 430 for tightening or loosening the other end of the waterproof fabric 420 may be provided at the other end of the waterproof fabric 420.

As an example, the tightening module 430 is provided along the edge of the other end of the waterproof fabric 420, and is accommodated inside the belt receiving part 431 and the belt receiving part 431, which includes an inner space and has both ends open. The tightening module 430 may include a belt 432 whose both ends are exposed to the outside of the belt receiving portion 431 and can be selectively connected or separated.

The belt receiving part 431 may be formed of the same material as the waterproof fabric 420, and may be formed to extend from the other end of the waterproof fabric 420. The belt receiving part 431 may be continuously provided along the entire edge of the other end of the waterproof fabric 420. However, when the length of the waterproof fabric 420 is sufficiently long, it is also possible to discontinuously include the belt receiving part 431. In other words, when the length is ensured so that the other end of the waterproof fabric 420 extends to the bottom of the second cover part 200 while the fastening rod 410 is fastened to the waterproof member fastening passage 122, the belt receiving part 431 is also possible to be provided discontinuously. That is, the belt receiving part 431 may include at least one section exposing the belt 432 to the outside.

The belt 432 can be accommodated in the inner space of the belt receiving part 431, and both end portions may be exposed to both open ends of the belt receiving part 431. In other words, both ends of the belt 432 may be exposed as openings formed at one end of the belt receiving part 431, and the other end may be exposed as openings formed at the other end of the belt receiving part 431. Both ends of the belt 432 exposed to the outside of the belt receiving part 431 may be selectively connected or separated.

A hook part 433 may be provided at one end of the belt 432, and a ring part 434 may be provided at the other end. The hook part 433 may be connected to or separated from the ring part 434, and through this both ends of the belt 432 may be connected or separated from each other.

At least one of the hook part 433 and the ring part 434 may be provided on the belt 432 to be position-adjustable. In other words, the hook part 433 and the ring part 434 may be provided to move inward and outward along the belt 432. The tension of the belt 432 may be adjusted by moving at least one of the hook part 433 and the ring part 434 to the inside of the belt 432 while the hook part 433 is inserted into and connected to the ring part 434.

The waterproof fabric 420 may be provided to extend to the lower portion of the second cover part 200, and when the user moves at least one position of the hook part 422 and the ring part 434 of the tightening module 430 to the inside of the belt 432, the belt 432 is tightened while the other end of the waterproof fabric 420 is provided under the second cover part 200.

As a result, since the waterproof fabric 420 extends to seal the gap between the first cover part 100 and the second cover part 200, and the belt receiving part 431 constituting the other end of the waterproof fabric 420 may extend to the bottom surface of the second cover part 200. This ensures rainwater or the like may not penetrate between the first cover part 100 and the second cover part 200 from the outside. As described above, the rooftop tent according to an embodiment of the present disclosure has the effect that the waterproof fabric 420 is easily fastened to or separated from the cover by tightening or loosening the other end of the waterproof fabric 420 through the tightening module 430.

According to the present embodiment having the above-described configuration, when the vehicular rooftop tent is fixedly installed on the roof of the vehicle and driven, the first and second cover parts equipped with two plate-shaped members and the waterproof part can store the tent part in an approximately rectangular box shape. As a result, there is an effect of minimizing concerns about obstruction of the driver's view due to fluttering of the fabric cover and reducing air resistance during driving. In addition, the tent part has two rigid plate-shaped members and a waterproof part that securely connects the plate-shaped members, which has the effect of providing the vehicular rooftop tent that has a waterproof function and has a neat appearance.

Although embodiments of the present disclosure have been described above as specific embodiments, this is merely an example, and the present disclosure is not limited thereto, and should be construed as having the widest scope following the basic ideas disclosed in this specification. A person skilled in the art may implement a pattern of a shape not specified by combining/substituting the disclosed embodiments, but this also does not depart from the scope of the present disclosure. In addition, a person skilled in the art can easily change or modify the embodiments disclosed based on the present specification, and it is clear that such changes or modifications also fall within the scope of the present disclosure.

## Claims

1. Vehicular rooftop tent comprising: a first cover part including a first plate-shaped member; a second cover part including a second plate-shaped member and rotatably connected to the first cover part; a tent portion coupled to the first cover part and the second cover part; and a waterproof part in which one end is fastened to the first cover part, wherein the rooftop tent has a folded mode in which the first cover part and the second cover part are arranged side by side and the tent part is accommodated in a space between the first cover part and the second cover part, and an unfolded mode in which the tent part is unfolded by rotating one of the first cover part and the second cover part about a hinge connection part with respect to the other, and the waterproof part comprising: a fastening rod detachably fastened to an edge of the first cover part in the folding mode state; a waterproof fabric in which one end is connected to the fastening rod and closes a space between the first cover part and the second cover part; and a tightening module provided at the other end of the waterproof fabric and selectively tightening or releasing the other end of the waterproof fabric, wherein the tightening module includes a belt receiving part provided along the edge of the other end of the waterproof fabric, including a space inside, and open at both ends; and a belt accommodated inside the belt receiving part and having both ends exposed to the outside of the belt receiving part to be selectively connected or separated.

2. The rooftop tent according to claim 1, further comprising a hook part provided at one end of the belt, and a ring part provided at the other end of the belt and into which the hook part is inserted, and wherein at least one of the hook part and the ring part is provided to be adjustable in the belt.

3. The rooftop tent according to claim 1, wherein the waterproof fabric is provided to cover at least a portion of the bottom surface of the second cover portion in the folding mode state.

4. The rooftop tent according to claim 1, wherein the first cover part includes a first edge frame having a shape capable of inserting the fastening rod and having a waterproof member fastening passage in which a gap is formed along a longitudinal direction, and the fastening rod is inserted into the waterproof member fastening passage to fasten the waterproof part to the first edge frame.

5. The rooftop tent according to claim 1, further comprising: a first corner frame covering at least one of corner portions of the first plate-shaped member, and a second corner frame covering at least one of corner portions of the second plate-shaped member, and wherein the first corner frame includes: an outer fastening member fastened to a corner portion of the first plate-shaped member; and an inner fastening member fastened to the outer fastening member and the first plate-shaped member such that at least a portion of the outer fastening member is stacked, and wherein the second corner frame includes: a tent outer fastening member fastened to a corner portion of the second plate-shaped member to be in contact with one surface of the second plate-shaped member; and a tent inner fastening member fastened to the tent outer fastening member so that at least a portion of the tent outer fastening member is stacked.
